# EUROPÄISCHE PATENTSCHRIFT

(11) **EP 2 855 195 B1**
(45) Veröffentlichungstag und Bekanntmachung des Hinweises auf die Patenterteilung: **19.10.2016**
(21) Anmeldenummer: 13722290.7
(22) Anmeldetag: 14.05.2013
(51) Int. Cl.: B60N 2/64, B60N 2/02, B60N 2/70, B60N 2/22, B64D 11/06, B60N 2/68

(54) **RÜCKENLEHNE FÜR EINEN FAHRZEUGSITZ**
SEATBACK FOR A VEHICLE
DOSSIER DE SIEGE DE VEHICULE

(30) Priorität: 24.05.2012 DE 102012208725
(43) Veröffentlichungstag der Anmeldung: 08.04.2015
(73) Patentinhaber: Lufthansa Technik AG, 22335 Hamburg (DE)
(72) Erfinder: THOMASCHEWSKI, Oliver, 22846 Norderstedt (DE); PIERREJEAN, Jacques, 20166 Pietrosella (FR)
(74) Vertreter: Müller Verweyen
(86) Internationale Anmeldenummer: PCT/EP2013/001409
(87) Internationale Veröffentlichungsnummer: WO 2013/174484

(56) Entgegenhaltungen:
- EP-A- 2 039 271
- EP-A2- 0 754 591
- EP-A2- 1 693 248
- WO-A1-02/102203
- WO-A1-2012/149978
- WO-A1-2013/045001
- DE-A1- 10 054 826
- DE-A1-102011 113 296
- JP-A- 2007 106 356
- US-A1- 2010 066 135

## Beschreibung

Die vorliegende Erfindung betrifft eine Rückenlehne für einen Fahrzeugsitz (siehe z.B. EP 2 039 271 A, dem Oberbegriff entsprechend).

Sitze weisen in der Regel eine Rückenlehne auf, die dazu dient, den Rücken eines Sitzenden abzustützen. Für Rückenlehnen von Sitzen sind verschiedenste Ausgestaltungen mit Bezug auf Abmaße und Polsterung bekannt.

Für Sitze in einem Fahrzeug, wie beispielsweise einem Auto, Bus, Flugzeug, Helikopter oder Boot, gelten besondere mechanische Anforderungen, die weit über die Anforderungen eines Sitzes für die unbewegte, immobile Anwendung, beispielsweise in Häusern, hinausgehen. Bei einem Fahrzeug müssen die Bewegungen und Beschleunigungen des Fahrzeugs über den Fahrzeugsitz an den Sitzenden übertragen werden. Dies ist insbesondere in einem Crashfall bei sehr hohen Beschleunigungen notwendig, um dem Sitzenden entsprechenden Halt geben zu können.

Die Rückenlehnen für Fahrzeugsitze weisen daher im Inneren eine stabile mechanische Struktur auf, für die die Erfüllung der Anforderungen für einen Crashfall nachgewiesen werden kann. Die mechanische Struktur eines üblichen Fahrzeugsitzes führt daher zu einer geringen Variabilität in der äußeren Gestaltung, die durch Veränderung der Nähte, Oberflächenstoffe und geringfügige Änderungen der Polsterung erreicht werden. Dies steht den von den Nutzern gewünschten, aus dem immobilen Bereich bekannten, verschiedensten Ausgestaltungen entgegen, wo unterschiedlichste Rückenlehnen ohne besondere Anforderungen existieren.

Ein gewünschter Fahrzeugsitz, der aufgrund der geringen Variabilität eines üblichen Fahrzeugsitzes nicht abgebildet werden kann, verlangt eine aufwendige und teure Neukonstruktion und neue Produktionsanlagen oder Werkzeuge sowie ggf. eine neue behördliche Zulassung für das entsprechende Fahrzeug. Hierzu kann entsprechend der jeweiligen gültigen Vorschriften eine aufwendige Nachweisführung durch Berechnungen und Versuche erforderlich sein.

Aus der o.g. EP 2 039 271 A1 ist eine Rückenlehne für einen Bürostuhl bekannt, wobei einzelne Elemente der Rückenlehne nebeneinander drehbar angeordnet sind. Die einzelnen Elemente bilden damit eine Fläche der Rückenlehne, die durch die drehbare Lagerung der einzelnen Elemente an die Rückenkontur eines Sitzenden angepasst werden kann.

Weiter ist aus der WO 02/102203 A1 ein Sitz bekannt, der Sitzelemente aufweist, wobei sich die einzelnen Sitzelemente um eine zentrale Achse bewegen können, die wiederum parallel zu der Wirbelsäule eines Insassen ausgerichtet ist.

Die EP 1 693 248 A2 zeigt eine weitere Rückenlehne für einen Bürostuhl, die sich an die Körperform des Sitzenden anpassen kann. Die Anpassbarkeit der Rückenlehne wird durch eine autoadaptive Längsstruktur erreicht, die aus einem vorderseitigen und einem rückseitigen Längselement besteht. Die beiden Längselemente werden über elastisch oder gelenkig gelagerte Distanzelemente beabstandet, so dass die Längsstruktur flexibel ist. Über Trägermittel, die die Bewegung der Längsstruktur übertragen können, sind an der Längsstruktur Stützflächen befestigt, an die sich der Sitzende anlehnen kann.

Aus der DE 100 54 826 A1 ist ein Kraftfahrzeugsitz mit einer Rückenlehne bekannt, an der mittels eines Schwenkmechanismus eine Kopfstütze gelagert ist. Ein Kopfstützenträger ist als Kette mit Gelenkelementen derart ausgeführt, dass dieser sich verformen und die Kopfstütze, beispielsweise im Falle einer Unfallsituation, in Richtung des Fahrzeuginsassen schwenken kann.

Die US 2010/0066135 A1 zeigt einen Kraftfahrzeugsitz mit einer Lendenwirbelunterstützung, die eine Reihe von horizontalen Querstreben im Inneren des Sitzes aufweist.

Die WO 2013/045001 offenbart einen Fahrzeugsitz mit einer Rückenlehne. Es ist ein Sitzteil vorgesehen, das Seitenwangen aufweist, so dass ein Formschluss zwischen den Seitenbereichen der Oberschenkel des Sitzinsassen und den Seitenwangen entsteht. Durch den Formschluss wird ein besserer Seitenhalt des Sitzinsassen erreicht.

Die Aufgabe der Erfindung ist es, eine Rückenlehne für einen Fahrzeugsitz anzugeben, welche eine einfachere und bessere Auslegung hinsichtlich individueller Anforderungen ermöglicht.

Die Aufgabe der Erfindung wird ausgehend von dem Oberbegriff des Anspruchs 1 durch dessen kennzeichnende Merkmale gelöst. Eine Rückenlehne für einen Fahrzeugsitz umfasst erfindungsgemäß eine Mehrzahl von Lehnenmodulen, wobei die Lehnenmodule einen Zentralbereich aufweisen, und wobei mindestens ein Lehnenmodul mit einem oder zwei weiteren gleichartigen Lehnenmodulen an dem Zentralbereich mechanisch miteinander verbunden ist, wobei mindestens zwei Lehnenmodule gegeneinander um eine Achse A der Rückenlehne beweglich sind, wobei die Beweglichkeit zwischen mindestens zwei Lehnenmodulen durch einen Bediener blockierbar ist, wobei eine Blockierung der Drehbarkeit des Lehnenmoduls um die Achse A durch einen formschlüssigen Eingriff eines Blockiermechanismus erfolgt, wobei der Blockiermechanismus jeweils mindestens zwei Flächen von zwei Lehnenmodulen, die einen Formschluss bilden, umfasst, wobei der formschlüssige Eingriff nach einer mechanischen Ansteuerung durch einen Sitzenden erfolgt.

Durch die vorgeschlagene Lösung wird eine Art Gliederbauweise der Rückenlehne nach dem Vorbild der menschlichen Wirbelsäule geschaffen, welche eine sehr variable Formgebung, insbesondere eine mögliche Anpassung an den Rücken eines Sitzenden, ermöglicht. Die Lehnenmodule formen nach Art einer Gliederkette die Rückenlehne für einen Fahrzeugsitz.

Die Glieder- bzw. Modulbauweise der Rückenlehne mit mehreren Lehnenmodulen erlaubt es, die Höhe der Rückenlehne in Abhängigkeit der eingesetzten Lehnenmodule zu variieren. Die Lehnenmodule können Gleichbauteile sein, was eine kostengünstige Fertigung erlaubt. Alternativ können verschieden dimensionierte Lehnenmodule in der Rückenlehne eingesetzt werden. Die verschiedenen Lehnenmodule können hierbei in unterschiedlicher Reihenfolge, Anordnung oder Anzahl verbunden sein, so dass sich aus einer vergleichsweise geringen Menge unterschiedlicher Lehnenmodule eine große Variantenvielfalt für die Rückenlehne ergeben kann. Das Erscheinungsbild der Rückenlehne, die die Rückenlehne für einen Fahrzeugsitz bilden kann, kann somit mit wenigen einheitlichen Lehnenmodulen variiert werden.

Die Lehnenmodule sind in der Rückenlehne in einem Zentralbereich mechanisch miteinander verbunden, so dass an der Rückenlehne auftretende mechanische Lasten über die verbundenen Zentralbereiche der einzelnen Lehnenmodule zu einer weiteren mechanischen Struktur des Fahrzeugsitzes im Bereich der Sitzfläche weitergeleitet werden können. Der Hauptlastpfad für die mechanischen Lasten kann durch die verbundenen Zentralbereiche der Lehnenmodule gebildet werden.

Vorzugsweise greifen mindestens zwei Lehnenmodule an den Zentralbereichen der Lehnenmodule ineinander. Das Ineinandergreifen von zwei Lehnenmodulen ist vorteilhaft, um eine steife mechanische Verbindung herzustellen, die eine Verschiebung, insbesondere eine translatorische Verbindung, der Lehnenmodule gegeneinander verhindert. Weiterhin ist das Eingreifen vorteilhaft, um eine einfache und robuste Montierbarkeit der Lehnenmodule zur Bildung der Rückenlehne zu erreichen.

In einer vorteilhaften Ausführungsform weist mindestens ein Lehnenmodul auf einer ersten Seite des Zentralbereichs eine Ausnehmung zur Aufnahme eines Steckelements eines weiteren Lehnenmoduls und auf einer zweiten Seite des Zentralbereichs ein Steckelement auf. Die Ausnehmung kann beispielsweise eine Öffnung, Vertiefung und/oder Bohrung sein, die eine formschlüssige Verbindung mit dem Steckelement eines anderen Lehnenmoduls ermöglichen kann. Eine formschlüssige Verbindung kann in einfacher Weise eine in mehreren Richtungen wirkende mechanische Verbindung zwischen zwei Lehnenmodulen bilden.

Das Steckelement ist in diesem Fall ein Fortsatz oder allgemein eine vorstehende Kontur, welcher bzw. welche in der Form an die Ausnehmung angepasst ist, so dass sich ein beliebig verlängerbares Stecksystem ergibt.

In einer weiteren vorteilhaften Ausführungsform ist das Steckelement mindestens eines Lehnenmoduls zapfenförmig. Durch die Zapfenform kann z.B. eine Verdrehbarkeit der Lehnenmodule zueinander verwirklicht werden. Außerdem kann durch die Zapfenform ein durchgehender, in sich formstabiler Kernbereich der Rückenlehne gebildet werden, welcher durch die Zapfen der Lehnenmodule insgesamt säulenartig ist.

Vorzugsweise weist mindestens ein Lehnenmodul zwei sich von dem Zentralbereich erstreckende seitliche Flügel auf. Die seitlichen Flügel können mechanische Lasten, beispielsweise vom Rücken eines Sitzenden, auf den Zentralbereich des Lehnenmoduls übertragen. Die Flügel der Lehnenmodule können eine flächige oder flächenartige Rückenlehne bilden. Flächenartig bezieht sich hierbei auf die Wirkung zur Aufnahme der Lasten eines Sitzenden, wobei mögliche Abstände zwischen den Flügeln verschiedener Lehnenmodule der Wirkung nicht entgegenstehen. In einer bevorzugten Ausführungsform sind die Flügel an dem Zentralbereich tauschbar. Es können daher verschiedene Flügel an dem gleichen Zentralbereich eines Lehnenmoduls montiert werden, wodurch sich eine große Variabilität für das Erscheinungsbild der Rückenlehne und insgesamt für einen Fahrzeugsitz ergeben kann, ohne dass die mechanische Struktur in ihrem Hauptlastpfad wesentlich beeinflusst wird. Die Flügel können sich in ihren Abmessungen und Formgestaltungen unterscheiden.

In einer vorteilhaften Ausführungsform sind die Flügel an dem Zentralbereich beweglich angeordnet. Die Beweglichkeit bezieht sich auf die Ausrichtung einer Hauptachse eines Flügels gegenüber dem Zentralbereich des entsprechenden Lehnenmoduls. Auf diese Weise kann der Komfort mit geringen Polstermassen erhöht werden. In möglichen vorteilhaften Ausführungsformen sind die Flügel unabhängig voneinander beweglich. Weiterhin können die Flügel in vorteilhaften Ausführungsformen aus einer Grundstellung nur entgegen der Sitzrichtung und wieder zurück in die Grundstellung bewegt werden. In weiteren vorteilhaften Ausführungsformen ist die Beweglichkeit der Flügel durch einen Bediener blockierbar.

In weiteren vorteilhaften Ausführungsformen sind mehr als zwei Flügel an einem Zentralbereich angeordnet, d.h. mindestens ein Lehnenmodul kann mindestens zwei sich von dem Zentralbereich erstreckende Flügel aufweisen, z.B. vier Flügel. Die Flügel können einzeln oder gekoppelt als Gruppe beweglich sein. Eine Kopplung kann seitlich erfolgen, so dass mindestens zwei Flügel, welche übereinander an der Rückenlehne angeordnet sind, sich gemeinsam gleichgerichtet bewegen können. Weiterhin können die Flügel jeweils mit einem seitlichen gegenüberliegenden Flügel auf der gleichen Lehnenhöhe gekoppelt sein, wobei in diesem Fall eine gegenläufige Beweglichkeit vorteilhaft ist, so dass beispielsweise durch ein Drücken nach hinten auf einen Flügel sich der jeweilige Flügel auf der anderen Seite des Zentralbereichs nach vorne bewegt.

Vorzugsweise weist mindestens ein Lehnenmodul auf mindestens einer Seite eine Polsterung auf. Die Polsterung ist für den Komfort des Sitzenden vorteilhaft. Eine Polsterung auf mehreren Seiten oder auch auf Teilbereichen einer Seite kann aus sicherheitstechnischen Gründen und/oder zu Zwecken der Gewichtsersparnis sinnvoll sein.

Die jeweiligen Lehnenmodule weisen vorteilhafterweise eine unterschiedliche Polsterung mit verschiedenen Härten, Dicken und/oder Bezügen auf. Hierdurch kann eine Komfortverbesserung und individuelle Gestaltung des Fahrzeugsitzes erreicht werden.

Vorzugsweise sind mindestens zwei Lehnenmodule gegeneinander um eine Achse beweglich. Eine Drehbarkeit gegeneinander, die vorzugsweise begrenzt ist, ermöglicht ein aktives Sitzen für den Sitzenden und eine hohe Nachgiebigkeit mit großem Komfort, wobei auch sehr dünne und/oder auch harte Polster ohne Komforteinbußen verwendet werden können.

In einer bevorzugten Ausführungsform sind mindestens zwei Lehnenmodule entlang der Achse gegeneinander beweglich. Dies kann eine vorteilhafte Anpassung, z.B. an die Körpergröße eines Sitzenden, ermöglichen. Insbesondere ist die Bewegung entlang der Achse, die die Mittelachse eines zapfenförmigen Steckelements sein kann, bei den beiden obersten Lehnenmodulen der Rückenlehne vorteilhaft, weil auf diese Weise das oberste Lehnenmodul eine Funktion als Kopfstütze übernehmen kann, die durch die Bewegung für einen Sitzenden einstellbar werden kann. Der Mechanismus zur Verschiebung ist vorzugsweise in die Lehnenmodule integriert.

In einer weiteren bevorzugten Ausführungsform sind mindestens zwei Lehnenmodule gegeneinander um eine Querachse beweglich. Die Querachse liegt vorzugsweise parallel zur Bodenebene und vorzugsweise parallel zu der Frontalebene eines auf dem Fahrzeugsitz sitzenden Menschen. Die Beweglichkeit um die Querachse kann eine Anpassung an den Rücken eines Sitzenden ermöglichen, was den Komfort des Fahrzeugsitzes erhöht. Die Beweglichkeit um eine Querachse ist in einer bevorzugten Ausführungsform federbelastet in Richtung des Sitzenden. Weiterhin erfolgt in bevorzugten Ausführungsformen eine Limitierung der Beweglichkeit.

Erfindungsgemäss ist die Beweglichkeit zwischen mindestens zwei Lehnenmodulen durch einen Bediener blockierbar. Dies ist insbesondere bei einer Nutzung der Rückenlehne in einem Luftfahrzeug vorteilhaft, um während des Reiseflugs durch die Drehbarkeit einen möglichst hohen Komfort bieten zu können, während in kritischen Flugphasen, wie Rollen, Start oder Landung, der Halt für den Sitzenden bei einem möglichen Crashfall gegeben ist. Weiterhin ist die Blockierung bei einer Verwendung der Rückenlehne in einer annähernd waagerechten Stellung in einer Schlaf- oder Ruheposition des Fahrzeugsitzes vorteilhaft, damit der Sitzende bzw. Liegende nicht vom Fahrzeugsitz rollt.

In einer möglichen vorteilhaften Ausführungsform ist Beweglichkeit zwischen mindestens zwei Lehnenmodulen durch eine Verkürzung der Rückenlehne in der Achse blockierbar. Auf diese Weise kann für eine kritische Phase ein definierter Zustand des Sitzes erreicht werden, die Komfortanforderungen treten bei einer Blockierung in den Hintergrund. Die Lehnenmodule weisen in einer bevorzugten Ausführungsform einen Abstand zueinander auf, der eine Relativbewegung ermöglicht. Dieser Abstand kann durch eine Federbelastung erreicht werden. Die Verkürzung der Rückenlehne kann diesen Abstand bis zu einem Formschluss zwischen den Lehnenmodulen verkleinern, so dass weitere Relativbewegungen der Lehnenmodule durch die Verkürzung der Rückenlehne verhindert werden.

Weiterhin ist die Beweglichkeit zwischen mindestens zwei Lehnenmodulen vorzugsweise durch mindestens eine entlang der Achse der Rückenlehne verlaufende, seilartige Verbindung blockierbar. Die seilartige Verbindung kann vorzugsweise dazu eingesetzt werden, die Abstände der Lehnenmodule entgegen einer möglichen Federbelastung zu verkleinern und die Rückenlehne entsprechend zu verkürzen, so dass weitere Bewegungen der Lehnenmodule gegeneinander, beispielsweise durch einen Formschluss, verhindert werden. In einer alternativen Ausführungsform kann es möglich sein, dass die seilartige Verbindung am Außenbereich der Flügel verläuft und bei einer blockierten Beweglichkeit des obersten und untersten Lehnenmoduls die dazwischen angeordneten Lehnenmodule durch eine Spannung der seilartigen Verbindung verhindert.

Vorzugsweise weist mindestens ein Lehnenmodul einen Anschlagspunkt für einen Sicherheitsgurt auf. Ein Anschlagspunkt für einen Sicherheitsgurt ist ein Element, welches dazu eingerichtet ist, Gurtkräfte aufzunehmen und/oder umzulenken. Ein Anschlagspunkt kann eine Umlenkrolle, einen Gurtaufroller, eine Befestigungsposition und/oder ein Gurtschloss umfassen. In vorteilhaften Ausführungsformen ist der Anschlagspunkt am obersten oder am zweitobersten Lehnenmodul angeordnet. Weiterhin können in vorteilhaften Ausführungsformen Anschlagspunkte am untersten Lehnenmodul angeordnet sein. In bevorzugten Ausführungsformen ist der Anschlagspunkt an einem Flügel des Lehnenmoduls angeordnet. Dieses Lehnenmodul bzw. dieser Flügel weist vorzugsweise keine Beweglichkeit in Sitzrichtung nach vorne auf.

Vorzugsweise weist mindestens ein Lehnenmodul im Zentralbereich in der Achse eine durchgehende Öffnung auf, und die Rückenlehne umfasst einen Stützstab, wobei der Stützstab in der durchgehenden Öffnung angeordnet ist. Der Stützstab verläuft durch die durchgehende Öffnung und kann am oberen Ende der Rückenlehne auch nur teilweise in eine Öffnung eingeführt werden. Am unteren Ende der Rückenlehne kann eine Anbindung des Stützstabes an weitere Strukturen eines Fahrzeugsitzes erfolgen. Der Stützstab kann eine zusätzliche lasttragende Funktion in der Rückenlehne ausführen. Der Stützstab kann rund und/oder röhrenförmig ausgeführt werden, was eine leichte Bauweise bei vergleichsweise hoher Steifigkeit ermöglicht. In einer bevorzugten Ausführungsform ist der Stützstab so angeordnet, dass eine mechanische Kopplung zu allen Lehnenmodulen der Rückenlehne vorliegt. Weiterhin kann die Beweglichkeit der Lehnenmodule gegeneinander durch die Steifigkeit des Stützstabs federbelastet sein.

Der Stützstab weist in einer vorteilhaften Ausführungsform in Richtung einer ersten Stabquerachse eine geringere Biegesteifigkeit als in Richtung einer senkrecht zu der ersten Stabquerachse liegenden zweiten Stabquerachse auf. Die unterschiedliche Steifigkeit in den beiden Stabquerachsen zur Achse der längsten Ausdehnung des Stützstabs kann vorteilhaft durch Material und Geometrie des Stützstabs ausgeführt werden. Eine geringere Steifigkeit in einer ersten Stabquerachse kann beispielsweise eine für den Sitzenden angenehme Nachgiebigkeit der Rückenlehne beim Zurücklehnen im Fahrzeugsitz ergeben. In einer zweiten Stabquerachse ist eine höhere Steifigkeit vorteilhaft, da hierdurch beispielsweise unerwünschte seitliche Ausweichbewegungen der Rückenlehne verringert werden können.

Weiterhin ist die Beweglichkeit zwischen mindestens zwei Lehnenmodulen durch eine mechanische Ansteuerung des Stützstabs blockierbar. Die mechanische Ansteuerung kann eine Bewegung, Verschiebung und/oder sonstige mechanische Verstellung des Stützstabs sein, die eine entsprechende Blockierung bewirken kann.

Dies kann in einer möglichen vorteilhaften Ausführungsform durch eine Verschiebung des Stützstabes in Richtung seiner Hauptachse erfolgen. In einer alternativen bevorzugten Ausführungsform kann eine Blockierung der Beweglichkeit durch eine Drehung des Stützstabs in den Öffnungen der Zentralbereiche der Lehnenmodule erfolgen.

Die Beweglichkeit von mindestens zwei Lehnenmodulen gegeneinander um eine Querachse kann vorzugsweise durch eine Drehung eines anisotropen, wie in den vorangehenden Abschnitten beschrieben, Stützstabs um 90° und dessen Hauptachse erfolgen, so dass für diese Querachse eine deutlich erhöhte Steifigkeit nach der Drehung vorliegen kann. Vorzugsweise ist in dieser Ausführungsform eine Beweglichkeit von mindestens zwei Lehnenmodulen gegeneinander nur um eine Querachse vorhanden, so dass diese Beweglichkeit um die Querachse durch Drehung des anisotropen Stützstabes um seine Hauptachse entsprechend federbelastet oder bei entsprechender Drehung in eine 90° versetzte Drehstellung des Stützstabes sehr steif sein kann, was einer Blockierung der Beweglichkeit entsprechen kann.

Erfindungsgemäss erfolgt eine Blockierung der Drehbarkeit von Lehnenmodulen um eine Achse durch einen entsprechenden formschlüssigen Eingriff, der nach einer mechanischen Ansteuerung durch den Sitzenden erfolgt.

Die Erfindung wird im Folgenden anhand bevorzugter Ausführungsformen unter Bezugnahme auf die beigefügten Figuren erläutert. Dabei zeigt:
- Fig. 1: eine Explosionsdarstellung einer Rückenlehne mit mehreren Lehnenmodulen;
- Fig. 2: eine Explosionsdarstellung mehrerer Lehnenmodule mit tauschbaren Flügeln;
- Fig. 3: mehrere bewegliche Lehnenmodule;
- Fig. 4: Lehnenmodule mit blockierbarer Beweglichkeit;
- Fig. 5: blockierbare Lehnenmodule mit einer Seilverbindung;
- Fig. 6: Lehnenmodule mit einer Beweglichkeit um eine Querachse;
- Fig. 7: Lehnenmodul mit beweglichen Flügeln in blockierter Stellung;
- Fig. 8: Lehnenmodul mit beweglichen Flügeln in freigegebener Stellung;
- Fig. 9: eine Explosionsdarstellung einer Rückenlehne mit einem Stützstab; und
- Fig. 10: mehrere Fahrzeugsitze mit Rückenlehnen in unterschiedlichen Varianten.

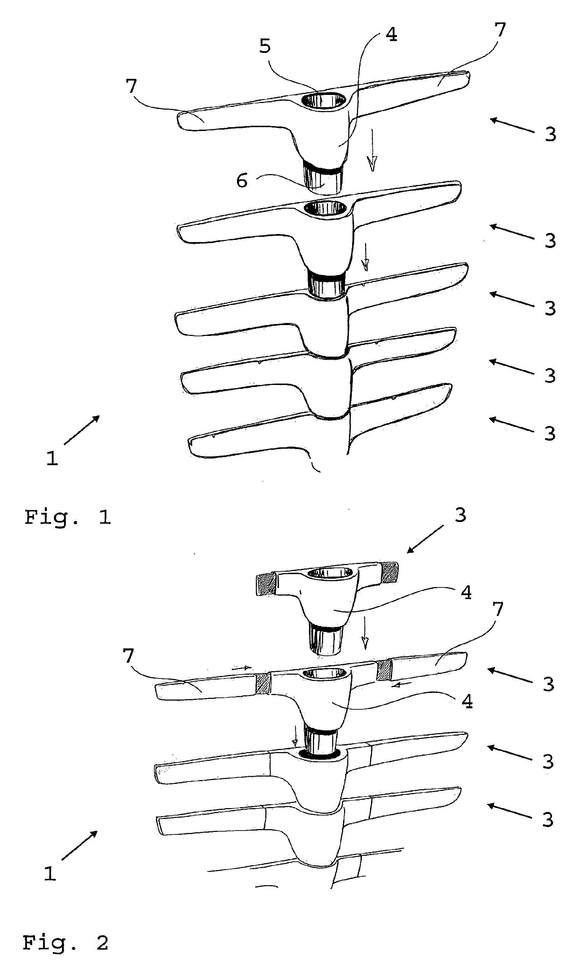

In Fig. 1 ist in einer Explosionsdarstellung ein Ausführungsbeispiel einer Rückenlehne 1 für einen Fahrzeugsitz 2 gezeigt. Die Rückenlehne 1 ist aus mehreren Lehnenmodulen 3 aufgebaut, die die Rückenlehne 1 bilden.

Die Lehnenmodule 3 weisen einen Zentralbereich 4 auf, an dem eine mechanische Verbindung zu weiteren Lehnenmodulen hergestellt werden kann. Die Zentralbereiche 4 der Lehnenmodule 3 bilden einen säulenartigen Lastpfad, über den die an der Rückenlehne 1 auftretenden Kräfte aufgenommen und an die weitere Sitzstruktur des Fahrzeugsitzes 2 weitergeleitet werden können.

Der Zentralbereich 4 der Lehnenmodule 3 weist in diesem Ausführungsbeispiel auf einer ersten Seite, in Fig. 1 oben dargestellt, eine Ausnehmung 5 auf. Auf der in Fig. 1 unten liegenden, zweiten Seite weist der Zentralbereich 4 der Lehnenmodule 3 ein zapfenförmiges Steckelement 6 auf. Das Steckelement 6 ist dafür vorgesehen, in die Ausnehmung 5 eines anderen Lehnenmoduls 3 eingeführt zu werden, um eine Übertragung von Kräften zwischen den Lehnenmodulen 3 durch die entstehende mechanische Verbindung zu ermöglichen. Die Rückenlehne 1 kann in einem möglichen Ausführungsbeispiel in einer Steckbauweise aus den Lehnenmodulen 3 gebildet werden.

In alternativen Ausführungsbeispielen sind andere Formgestaltungen und Ausführungen für die Ausnehmungen 5 und Steckelemente 6 möglich. Ein möglicher Verriegelungs- und/oder Sicherungsmechanismus, der den Montagezustand sichert, ist nicht dargestellt.

Die Steckelemente 6 weisen in einem vorteilhaften Ausführungsbeispiel eine Öffnung auf, die das Führen von Kabeln und/oder Leitungen entlang der Rückenlehne 1 durch die Lehnenmodule 3 ermöglicht.

Die Lehnenmodule 3 weisen in einem bevorzugten Ausführungsbeispiel seitliche Flügel 7 auf, die sich beidseitig von dem Zentralbereich 4 erstrecken. Die seitlichen Flügel 7 verbreitern die Rückenlehne 1 entsprechend, so dass der Rücken eines Sitzenden unter anderem durch die seitlichen Flügel 7 gestützt werden kann.

Die Lehnenmodule 3 des in Fig. 1 dargestellten Ausführungsbeispiels sind gleiche Lehnenmodule 3, die in ihrem Zusammenwirken die Rückenlehne 1 eines Fahrzeugsitzes 2 bilden. Es können jedoch auch gleichartige Lehnenmodule 3 die Rückenlehne 1 bilden. Gleichartige Lehnenmodule 3 können voneinander abweichende Ausmaße, Formgestaltungen, Flügelbreiten und/oder -längen und/oder weitere voneinander abweichende Merkmale aufweisen. In einem vorteilhaften Ausführungsbeispiel bleiben jedoch der oder die Bereiche des Zentralbereichs 4 zur mechanischen Verbindung gleich, so dass gleichartige Lehnenmodule 3 miteinander kombinierbar sind.

Die Kombination von unterschiedlichen, gleichartigen Lehnenmodulen 3 ermöglicht vielfältige Gestaltungsmöglichkeiten mit einer geringeren Anzahl von unterschiedlichen Lehnenmodulen 3. Die Rückenlehne 1 des Fahrzeugsitzes 2 kann auf diese Weise sehr individuell zusammengestellt werden, wobei durch Verwendung eines einheitlichen Zentralbereichs 4 die mechanischen Eigenschaften erhalten bleiben, was insbesondere eine erneute mechanische Auslegung und Zulassung einsparen kann.

Fig. 2 zeigt ein Ausführungsbeispiel einer Rückenlehne 1 mit mehreren Lehnenmodulen 3, wobei die Lehnenmodule 3 in diesem Ausführungsbeispiel tauschbare Flügel 7 aufweisen. Die Flügel 7 können daher durch einen entsprechenden Montagevorgang getauscht werden, so dass verschiedene Varianten und/oder Abmessungen in einfacher Weise realisiert werden können. Die Flügel 7 nehmen, wie in den vorherigen Ausführungsbeispielen auch, Kräfte auf und leiten diese an den Zentralbereich 4 des entsprechenden Lehnenmoduls 3 weiter.

Die Tauschbarkeit erlaubt eine hohe Variantenvielfalt, so dass in einfacher Weise verschiedene Fahrzeugsitze 2 mit unterschiedlichen Rückenlehnen 1 realisierbar sein können. Die Flügel 7 weisen insbesondere eine seitliche Ausprägung an der Rückenlehne 1 auf und sind daher mitbestimmend für die Breite und Erscheinungsform der Rückenlehne 1.

In einem weiteren alternativen Ausführungsbeispiel sind die Flügel 7 an dem Zentralbereich 4 eines Lehnenmoduls 3 beweglich angeordnet, so dass die Flügel 7 eine Nachgiebigkeit in eine oder mehrere Richtungen aufweisen können. Die Beweglichkeit der Flügel 7 ist vorzugweise federbelastet, so dass sich eine, wie beispielsweise in Fig. 1 oder Fig. 2, dargestellte Grundstellung ergeben kann.

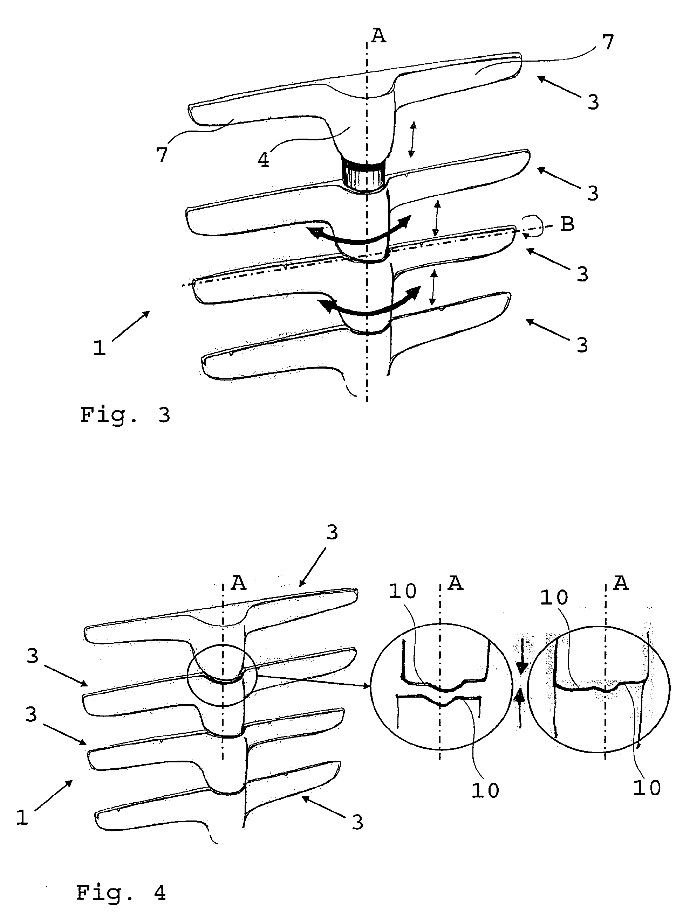

Ein weiteres vorteilhaftes Ausführungsbeispiel ist in Fig. 3 gezeigt. Hier weisen mehrere Lehnenmodule 3 der Rückenlehne 1 eine Beweglichkeit gegen- bzw. zueinander auf. Vorteilhaft ist insbesondere die erfindungsgemässe Beweglichkeit von Lehnenmodulen 3 um eine Achse A. Die Lehnenmodule 3 sind daher, soweit die Steckelemente 6 zapfenförmig und insbesondere zylindrisch sind, drehbar um diese Achse A. Diese Beweglichkeit ist vorzugsweise begrenzt und federbelastet, so dass sich in einem unbelasteten Zustand eine Grundstellung, wie sie in Fig. 3 gezeigt ist, einstellt. Weiterhin ist die Drehbewegung in diesem Ausführungsbeispiel begrenzt. Ein Sitzender kann durch entsprechende Kraftausübung eine Drehung einzelner oder mehrerer Lehnenmodule 3 um die Achse A hervorrufen. Diese geben entsprechend nach und können auf diese Weise ein sehr bequemes und aktives Sitzen auf dem Fahrzeugsitz 2 ermöglichen. Weiterhin kann durch die Beweglichkeit der Lehnenmodule 3 um die Achse A ein Komfort der Rückenlehne 1 mit dünnen Polstern oder in einem möglichen Ausführungsbeispiel ohne weitere Polster erreicht werden.

Die Beweglichkeit der Lehnenmodule 3 und/oder der Flügel 7 kann gegenüber der Grundstellung zu höheren Positionen an der Rückenlehne 1 zunehmen. Die obersten Flügel 7 und/oder das oberste Lehnenmodul 3 weisen somit in vorteilhaften Ausführungsbeispielen die höchste Beweglichkeit bzw. die weiteste Begrenzung auf. Die Federbelastung bzw. die Rückstellkraft in die Grundstellung kann ebenfalls zu höheren Positionen an der Rückenlehne 1 abnehmen. In möglichen Ausführungsbeispielen können das unterste Lehnenmodul 3 sowie dessen Flügel 7 unbeweglich ausgeführt sein, was insbesondere für eine Blockierung der weiteren Lehnenmodule 3 mechanische Vorteile bietet.

In dem in Fig. 3 dargestellten Ausführungsbeispiel ist das oberste Lehnenmodul 3 entlang der Achse A beweglich, so dass der Abstand zu dem darunter platzierten Lehnenmodul 3 variabel ist und durch einen Bediener eingestellt werden kann. Dies ist für eine Anpassung an die Größenverhältnisse eines Sitzenden vorteilhaft. Die Höhe der Rückenlehne 1 kann daher aufgrund der entsprechenden Beweglichkeit eingestellt werden. Im obersten Lehnenmodul 3 der Fig. 3 ist keine weitere Ausnehmung 5 auf der oberen Seite vorgesehen. Dieses Lehnenmodul 3 entspricht daher einer Kopfstütze der Rückenlehne 1.

In alternativen Ausführungsbeispielen können auch mehrere oder alle Lehnenmodule 3 eine Beweglichkeit entlang der Achse A aufweisen, so dass der relative Abstand zueinander variabel ausgestaltet werden kann. Die Begrenzung der Beweglichkeit entlang der Achse A ergibt somit die minimale und die maximale Höhe bzw. Länge der Rückenlehne 1. Die Beweglichkeit der Lehnenmodule 3 entlang der Achse A erlaubt eine anatomische Anpassung an den Rücken eines Sitzenden. In vorteilhaften Ausführungsbeispielen sind die Lehnenmodule 3 einer Rückenlehne 1 in zwei Gruppen entlang der Achse A beweglich, wobei unterhalb dieser zwei Gruppen eine feststehende Gruppe angeordnet sein kann, so dass sich bei einfacher Bauweise eine hohe Einstellbarkeit der Rückenlehne 1 ergibt. Eine Gruppe kann in diesem Ausführungsbeispiel auch nur aus einem Lehnenmodul 3 gebildet werden. Neben einer Anpassung an die Rückenlänge ist auch eine individuelle Anpassung der Position von Polstern zu den entsprechenden Stellen des Rückens eines Sitzenden in der Achse A möglich, so dass beispielsweise eine Polsterung zur Unterstützung der Lendenwirbel entsprechend durch den Sitzenden positioniert werden kann, wobei die Gesamtlänge der Rückenlänge auch gleich gehalten werden kann.

In einem weiteren Ausführungsbeispiel sind zwei Lehnenmodule 3 gegeneinander um eine Querachse B beweglich. Hierdurch ergibt sich eine relative Rotationsbewegung von zwei Lehnenmodulen 3 zueinander. Dies ermöglicht eine Nachgiebigkeit und eine Anpassung an den Rücken eines Sitzenden, die für einen verbesserten Sitzkomfort sorgen kann. Insbesondere kann dieser Sitzkomfort mit geringen Polsterdicken erreicht werden, wodurch das Gesamtgewicht und der Bauraum des Fahrzeugsitzes 2 reduziert werden kann. In vorteilhaften Ausführungsbeispielen sind an einer Rückenlehne 1 jeweils zwei Lehnenmodule 3 an zwei Positionen an der Rückenlehne 1 gegeneinander um eine Querachse B beweglich, wohingegen die weiteren Lehnenmodule 3 gegeneinander dauerhaft blockiert sein können.

Die Limitierung kann durch eine entsprechende Formgestaltung der mechanischen Verbindung zwischen den Lehnenmodulen 3 erreicht werden. Die Beweglichkeit in Blickrichtung und entgegen der Blickrichtung eines Sitzenden kann unterschiedlich ausgeführt sein. Diese Beweglichkeit von zwei Lehnenmodulen 3 um eine Querachse B ist in einer vorteilhaften Ausführungsform federbelastet. Die Federbelastung kann insbesondere entgegen dem Rücken eines möglichen Sitzenden gerichtet sein.

Der Bewegungsumfang der Rückenlehne 1 kann in stark vereinfachter Weise mit dem Bewegungsumfang einer Wirbelsäule verglichen werden. Die einzelnen Lehnenmodule 3 können relative Bewegungen zueinander durchführen. Hierbei können die mechanischen Verbindungen zwischen jeweils zwei Lehnenmodulen 3 unterschiedliche Freiheitsgerade aufweisen. In einem alternativen Ausführungsbeispiel sind weitere Relativbewegungen zwischen den Lehnenmodulen 3 möglich.

Erfindungsgemäss ist die Beweglichkeit der Rückenlehne 1 durch einen Bediener, beispielsweise einen Sitzenden, blockierbar. Eine Blockierung der Rückenlehne 1 kann beispielsweise bei der Verwendung des Fahrzeugsitzes 2 in einem Luftfahrzeug notwendig sein, um behördliche Anforderungen in bestimmten Flugphasen, wie beispielsweise Start, Landung und/oder Rollen, zu gewährleisten. Bei einem erhöhten Risiko eines Unfalls kann die Blockierung der Beweglichkeit der Rückenlehne 1 zu einem verbesserten Crashverhalten des Fahrzeugsitzes 2 führen. Weiterhin ist eine Blockierung der Beweglichkeit der Rückenlehne 1 vorteilhaft, wenn die Rückenlehne 1 flach gestellt wird und der Fahrzeugsitz 2 in einer Rast- oder Liegeposition eingestellt ist. Durch die Blockierung in einem solchen Fall kann verhindert werden, dass der Sitzende bzw. Liegende bei dezentraler Positionierung auf dem Fahrzeugsitz 2 durch die Beweglichkeit, beispielsweise um die Achse A, seitlich herunterrollt.

In Fig. 4 ist eine mögliche Ausführungsform eines Blockiermechanismus dargestellt, der die Relativbewegung zwischen zwei oder mehreren Lehnenmodulen 3 bewirken kann. Zwei Flächen 10 von zwei Lehnenmodulen 3 sind in einer beweglichen Stellung soweit voneinander entfernt, dass durch die entsprechenden mechanischen Teile der Lehnenmodule 3 eine definierte Relativbewegung möglich ist. Diese Stellung kann beispielsweise durch eine entsprechende Federkraft erreicht werden. Für eine Blockierung der Beweglichkeit um eine oder mehrere Achsen werden die Lehnenmodule 3 der Rückenlehne 1 durch Krafteinwirkung gegeneinander gedrückt, so dass jeweils mindestens zwei Flächen 10 von zwei Lehnenmodulen 3 einen Formschluss bilden können, der die Beweglichkeit in einer definierten Stellung blockiert. Das Gegeneinanderdrücken der Lehnenmodule 3 entspricht in diesem Ausführungsbeispiel einer Stauchung der Rückenlehne 1.

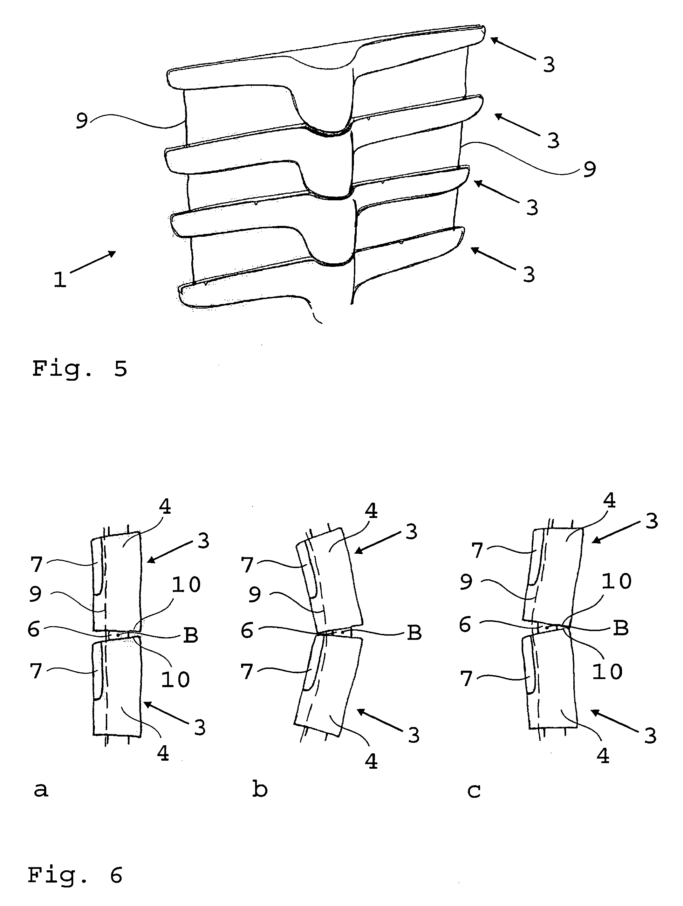

Fig. 5 zeigt eine Rückenlehne 1 mit mehreren Lehnenmodulen 3, die eine blockierbare Beweglichkeit aufweisen. Weiterhin weist die Rückenlehne 1 in diesem Ausführungsbeispiel eine seilartige Verbindung 9 an beiden äußeren Seiten im Bereich der Flügel 7 auf. Die seilartige Verbindung 9 der einzelnen Lehnenmodule 3 kann in verschiedenen möglichen Ausführungsbeispielen zur Blockierung der Beweglichkeit eingesetzt werden. Mit Bezug auf das Ausführungsbeispiel aus Fig. 4 kann eine Stauchung oder Kompression der Rückenlehne 1, die die Lehnenmodule 3 aneinander drückt, durch eine entsprechende Zugkraft über die seilartige Verbindung 9 erreicht werden. Die seilartige Verbindung 9 kann dementsprechend eine Zugkraft zwischen dem obersten Lehnenmodul 3 und dem untersten Lehnenmodul 3 oder einem entsprechend alternativen Teil des Fahrzeugsitzes 2 bewirken, so dass die Lehnenmodule 3 in einer Grundstellung blockierbar sind. In einem ähnlichen, jedoch alternativen Ausführungsbeispiel wird nur eine seilartige Verbindung 9 eingesetzt, wobei diese vorteilhaft entlang oder durch die Zentralbereiche 4 der Lehnenmodule 3 verläuft.

In einer weiteren vorteilhaften Ausführungsform, die eine Relativbewegung der Lehnenmodule 3, insbesondere eine Drehung der Lehnenmodule 3 blockieren kann, wird das oberste Lehnenmodul 3 durch weitere mechanische Mittel blockiert. Die Zugsteifigkeit der seilartigen Verbindung 9 zusammen mit einem fest angeordneten unteren Lehnenmodul 3 führt dann zu einer Blockierung der Bewegung der im mittleren Bereich der Rückenlehne 1 angeordneten Lehnenmodule 3.

In Fig. 6 sind zwei Lehnenmodule 3 einer Rückenlehne 1 dargestellt, die gegeneinander um eine Querachse B beweglich sind. Die Lehnenmodule 3 befinden sich in den Ansichten a, b, c jeweils in einer beweglichen Stellung, wobei die Ansicht a eine federbelastete Grundstellung darstellt. Die Lehnenmodule 3 weisen eine entlang des Zentralbereichs 4 verlaufende, seilartige Verbindung 9 auf, die in Richtung eines Sitzenden parallel versetzt zur Mitte der Lehnenmodule 3 verläuft.

In Ansicht b ist die seilartige Verbindung mit einer ausreichenden Zugkraft beaufschlagt, so dass sich aufgrund der geometrischen Anordnung der seilartigen Verbindung 9 eine Krümmung der Rückenlehne 1 zu dem Rücken eines Sitzenden ergibt. Die Krümmung der Rückenlehne 1 wird durch einen Kontakt der Flächen 10 der Lehnenmodule 3 im vorderen Bereich begrenzt. Die geometrische Anordnung der seilartigen Verbindung 9 und die relative Beweglichkeit der Lehnenmodule 3 erlauben in einem möglichen Ausführungsbeispiel weiterhin eine Nachgiebigkeit gegenüber Kräften, die entgegen der Krümmung wirken. Eine weitere Erhöhung der Zugkraft der seilartigen Verbindung 9 würde die in diesem Ausführungsbeispiel gegeneinander federbelastet beweglichen Lehnenmodule 3 in dem vorderen und dem hinteren Bereich die Flächen 10 in Kontakt bringen, was einer blockierten Stellung entspricht, wie sie auch in Fig. 4 dargestellt ist.

Die Ansicht c der Fig. 6 zeigt die Relativbewegung der zwei Lehnenmodule 3 um die Querachse B bis die Flächen 10 in dem hinteren Bereich der Zentralbereiche 4 in Kontakt sind. Die Nachgiebigkeit der Rückenlehne 1 wird somit nach hinten durch die Flächen 10 begrenzt. Die seilartige Verbindung 9 unterstützt diese Begrenzung durch eine begrenzte Länge, die ein weiteres nach hinten Kippen nach Erreichen des Kontakts der Flächen 10 im hinteren Bereich der Zentralbereiche 4 verhindert. Die mögliche Krümmung der Rückenlehne 1 aus der in Ansicht a gezeigten Grundstellung ist in einem vorteilhaften Ausführungsbeispiel durch die Ausprägung der Flächen 10 in Blickrichtung eines Sitzenden größer als entgegen der Blickrichtung, so dass sich angenehme Einstellungen der Rückenlehne 1 ergeben.

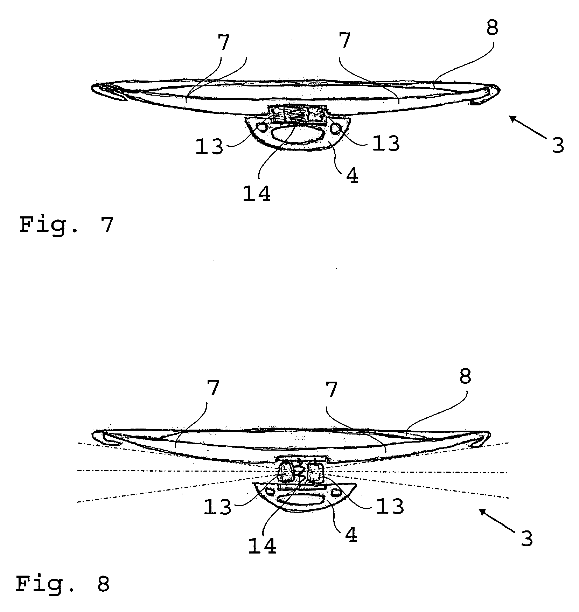

In der Fig. 7 und der Fig. 8 ist ein vorteilhaftes Ausführungsbeispiel für ein Lehnenmodul 3 gezeigt, an dem die Flügel 7 beweglich an dem Zentralbereich 4 angeordnet sind. Die Flügel 7 sind für eine federbelastete Rotation um mindestens 1° gegenüber dem Zentralbereich 4 eingerichtet. In Fig. 7 ist die Rotation der Flügel 7 gegenüber dem Zentralbereich 4 blockiert. Fig. 8 zeigt die Flügel 7 mit einer freigegebenen Rotierbarkeit gegenüber dem Zentralbereich 4. Die Polsterung 8 des Lehnenmoduls 3 ist in diesem Ausführungsbeispiel eine Elastomerpolsterung, die zwischen den seitlichen Enden der Flügel 7 gespannt ist.

Zwischen dem Zentralbereich 4 und den Flügeln 7 sind in dem Ausführungsbeispiel aus der Fig. 7 und der Fig. 8 zwei pneumatische Module 13 und eine Rückstellfeder 14 angeordnet. Die pneumatischen Module 13 sind gasdicht und können durch geeignete Mittel mit einem Überdruck beaufschlagt werden. Bei der Beaufschlagung der pneumatischen Module 13 mit einem Überdruck ergibt sich eine Druckkraft, die den Zentralbereich 4 und die Flügel 7 auseinander drückt. Das pneumatische Modul 13 kann beispielsweise ein Gassack sein. Die Rückstellfeder 14 ist in diesem Ausführungsbeispiel eine Zugfeder, die dauerhaft eine Zugkraft zwischen den Flügeln 7 und dem Zentralbereich 4 bewirkt.

In Fig. 7 ist der Überdruck in den pneumatischen Modulen 13 nicht vorhanden oder nicht ausreichend groß genug, um die entgegenwirkende Zugkraft der Rückstellfeder 14 zu überwinden. Die Flügel 7 liegen somit an dem Zentralbereich 4 an, wodurch eine Rotation blockiert wird, und somit die Flügel 7 festgestellt sind. Die festgestellte Position ist somit die Standardposition, die erreicht wird, wenn die pneumatischen Module 13 nicht mit Überdruck gegenüber dem Umgebungsdruck beaufschlagt werden, oder wenn ein Leck in der Pneumatik auftritt oder die pneumatischen Module 13 beschädigt sind. Vorteilhafterweise wird die Rotation erst bei einem Überdruck von mehr als einem Atmosphärendruck freigegeben.

In Fig. 8 weisen die pneumatischen Module 13 einen ausreichenden Überdruck auf, so dass sich diese ausdehnen oder auch aufgeblasen werden. Die Zugkraft der Rückstellfeder 14 wird dadurch überwunden, die Rückstellfeder 14 gelängt und die Rotation der Flügel 7 durch eine Beabstandung zu dem Zentralbereich 4 freigegeben. Es ergibt sich eine federbelastete Rotierbarkeit der Flügel 7 mit den entsprechenden Komfortvorteilen. Die Federbelastung der Rotation erfolgt in diesem Ausführungsbeispiel durch die pneumatischen Module 13, da jeweils ein pneumatisches Modul 13 bei einer Rotation der Flügel 7 gegenüber dem anderen pneumatischen Modul 13 komprimiert wird, was eine entsprechende Rückstellkraft bewirkt.

In einem bevorzugten Ausführungsbeispiel kann durch die Einstellung des Überdrucks der pneumatischen Module 13 eine individuelle Rückstellkraft bei einer Rotation der Flügel 7 eingestellt werden. Dies kann für alle an der Rückenlehne 1 angeordneten Flügel 7 in gleicher Weise und individuell unterschiedlich erfolgen. Weiterhin kann durch die Einstellung des Überdrucks und die dementsprechende Beabstandung der Flügel 7 zum Zentralbereich 4 eine individuelle Begrenzung der Rotation erreicht werden.

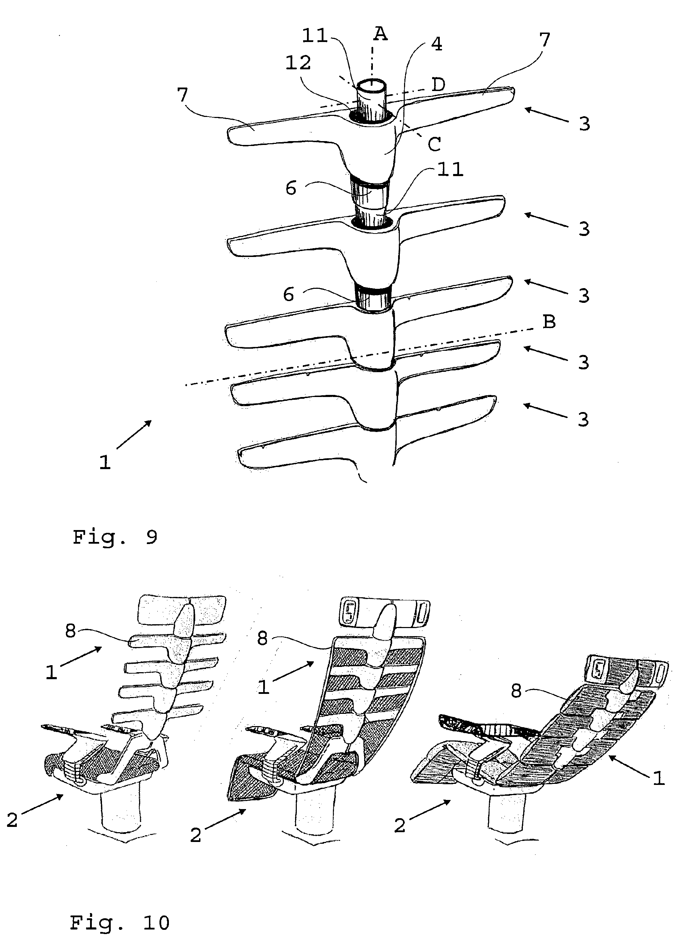

Fig. 9 zeigt ein Ausführungsbeispiel einer Rückenlehne 1 mit mehreren Lehnenmodulen 3, die im Zentralbereich 4 eine durchgehende Öffnung 12 aufweisen. Die durchgehende Öffnung 12 ist im Zentralbereich 4 entlang der Achse A angeordnet. Die Mittelachse der durchgehenden Öffnung 12 liegt in diesem Ausführungsbeispiel koinzident mit der Mittelachse des Steckelements 6, so dass das Steckelement 6 von der durchgehenden Öffnung 12 durchdrungen wird. In den durchgehenden Öffnungen 12 der Zentralbereiche 4 ist in diesem vorteilhaften Ausführungsbeispiel ein Stützstab 11 angeordnet. Der Stützstab 11 verläuft vorteilhafterweise durch alle Lehnenmodule 3 und stützt diese über den Zentralbereich 4.

In diesem Ausführungsbeispiel weisen die Lehnenmodule 3 eine Rotierbarkeit gegeneinander um eine Querachse B auf, wobei in diesem Ausführungsbeispiel keine Relativdrehung von Lehnenmodulen 3 zueinander um eine zweite Drehachse durch die Formgestaltung der mechanischen Verbindung zwischen den Lehnenmodulen 3 möglich ist. Der Stützstab 11 ist vorteilhafterweise in einer Stabquerachse biegesteifer und in einer senkrecht hierzu liegenden weiteren Stabquerachse biegeweicher. Weiterhin ist der Stützstab 11 vorteilhafterweise rund. Der Stützstab 11 kann ein anisotropes oder orthotropes Material sein, welches eine unterschiedliche Steifigkeit bzw. Biegesteifigkeit in zwei senkrecht zueinander liegenden Stabquerachsen C, D ermöglicht. Dies kann beispielsweise durch einen entsprechenden Faserverbundaufbau erreicht werden.

Eine Blockierung oder Freigabe der Beweglichkeit von mindestens zwei Lehnenmodulen 3 um die Querachse B kann daher in diesem Ausführungsbeispiel durch eine Drehung des Stützstabs 11 um 90° erfolgen. Die Beweglichkeit um die Querachse B durch Drehung des Stützstabes 11 kann entsprechend der Drehstellung der beiden mit dem Stützstab 11 mitdrehenden Stabquerachsen C, D des Stützstabes 11 zur Querachse B weich bzw. federnd oder steif sein, was einer Blockierung der Beweglichkeit um die Querachse B der Rückenlehne 1 entsprechen kann.

In Fig. 10 sind mehrere Varianten eines Fahrzeugsitzes 2 mit jeweils einer Rückenlehne 1, die aus mehreren Lehnenmodulen 3 gebildet ist, dargestellt. Die Lehnenmodule 3 weisen den gleichen Grundkörper insbesondere im Zentralbereich 4 der Lehnenmodule 3 auf. Durch die Variation der Flügel 7 und/oder der Lehnenmodule 3 ergibt sich in einfacher Weise eine unterschiedliche Gestaltung der Fahrzeugsitze 2. Polsterungen 8 können an den Lehnenmodulen 3 angeordnet werden, was die Gestaltungsfreiheit erhöht. Die Polsterdicken können in möglichen Ausführungsbeispielen der Rückenlehne 1 sehr dünn ausgeführt werden. Durch die entsprechende Beweglichkeit bzw. Nachgiebigkeit der Lehnenmodule 3 kann der Fahrzeugsitz 2 dennoch komfortabel ausgeführt sein.

Weiterhin kann die Beweglichkeit von einzelnen Lehnenmodulen 3 zu einem aktiven Sitzgefühl beitragen.

## Patentansprüche

1. Rückenlehne (1) für einen Fahrzeugsitz (2), wobei die Rückenlehne (1) eine Mehrzahl von Lehnenmodulen (3) umfasst, wobei die Lehnenmodule (3) einen Zentralbereich (4) aufweisen, und dass mindestens ein Lehnenmodul (3) mit einem oder zwei weiteren gleichartigen Lehnenmodulen (3) an dem Zentralbereich (4) mechanisch miteinander verbunden ist, **dadurch gekennzeichnet, dass** mindestens zwei Lehnenmodule (3) gegeneinander um eine im Wesentlichen vertikale Achse (A) der Rückenlehne (1) beweglich sind, wobei die Beweglichkeit zwischen mindestens zwei Lehnenmodulen (3) durch einen Bediener, beispielsweise einen Sitzenden, blockierbar ist, wobei eine Blockierung der Drehbarkeit des Lehnenmoduls (3) um die Achse (A) durch einen formschlüssigen Eingriff eines Blockiermechanismus erfolgt, wobei der Blockiermechanismus jeweils mindestens zwei Flächen (10) von zwei Lehnenmodulen (3), die einen Formschluss bilden, umfasst, wobei der formschlüssige Eingriff nach einer mechanischen Ansteuerung durch einen Sitzenden erfolgt.

2. Rückenlehne (1) nach Anspruch 1, **dadurch gekennzeichnet, dass** mindestens zwei Lehnenmodule (3) an den Zentralbereichen (4) der Lehnenmodule (3) ineinandergreifen.

3. Rückenlehne (1) nach Anspruch 1 oder 2, **dadurch gekennzeichnet, dass** mindestens ein Lehnenmodul (3) auf einer ersten Seite des Zentralbereichs (4) eine Ausnehmung (5) zur Aufnahme eines Steckelements (6) eines weiteren Lehnenmoduls (3) und auf einer zweiten Seite des Zentralbereichs (4) ein Steckelement (6) aufweist.

4. Rückenlehne (1) nach Anspruch 3, **dadurch gekennzeichnet, dass** das Steckelement (6) mindestens eines Lehnenmoduls (3) zapfenförmig ist.

5. Rückenlehne (1) nach einem der vorangehenden Ansprüche, **dadurch gekennzeichnet, dass** mindestens ein Lehnenmodul (3) zwei sich von dem Zentralbereich (4) erstreckende seitliche Flügel (7) aufweist.

6. Rückenlehne (1) nach Anspruch 5, **dadurch gekennzeichnet, dass** die Flügel (7) an dem Zentralbereich (4) tauschbar und/oder beweglich angeordnet sind.

7. Rückenlehne (1) nach einem der vorangehenden Ansprüche, **dadurch gekennzeichnet, dass** mindestens ein Lehnenmodul (3) auf mindestens einer Seite eine Polsterung (8) aufweist.

8. Rückenlehne (1) nach Anspruch 7, **dadurch gekennzeichnet, dass** die jeweiligen Lehnenmodule (3) eine unterschiedliche Polsterung (8) mit verschiedenen Härten, Dicken und/oder Bezügen aufweisen.

9. Rückenlehne (1) nach einem der vorangehenden Ansprüche, **dadurch gekennzeichnet, dass** mindestens zwei Lehnenmodule (3) entlang der Achse (A) der Rückenlehne (1) und um eine Querachse (B) gegeneinander beweglich sind.

10. Rückenlehne (1) nach einem der vorangehenden Ansprüche, **dadurch gekennzeichnet, dass** die Beweglichkeit zwischen mindestens zwei Lehnenmodulen (3) durch eine Verkürzung der Rückenlehne (1) in der Achse (A) der Rückenlehne (1) blockierbar ist.

11. Rückenlehne (1) nach einem der vorangehenden Ansprüche,
**dadurch gekennzeichnet, dass** die Beweglichkeit zwischen mindestens zwei Lehnenmodulen (3) durch mindestens eine entlang der Achse (A) der Rückenlehne (1) verlaufende, seilartige Verbindung (9) blockierbar ist.

12. Rückenlehne (1) nach einem der vorangehenden Ansprüche,
**dadurch gekennzeichnet, dass** mindestens ein Lehnenmodul (3) im Zentralbereich (4) in der Achse (A) der Rückenlehne (1) eine durchgehende Öffnung (12) aufweist, und dass die Rückenlehne (1) einen Stützstab (11) umfasst, wobei der Stützstab (11) in der durchgehenden Öffnung (12) angeordnet ist.

13. Rückenlehne (1) nach Anspruch 12, **dadurch gekennzeichnet, dass** der Stützstab (11) in Richtung einer ersten Stabquerachse (C) eine geringere Biegesteifigkeit als in Richtung einer senkrecht zu der ersten Stabquerachse (C) liegenden zweiten Stabquerachse (D) aufweist.

14. Rückenlehne (1) nach Anspruch 12 oder 13, **dadurch gekennzeichnet, dass** die Beweglichkeit zwischen mindestens zwei Lehnenmodulen (3) durch eine mechanische Ansteuerung des Stützstabs (11) blockierbar ist.

15. Rückenlehne (1) nach einem der vorangehenden Ansprüche,
**dadurch gekennzeichnet, dass** mindestens ein Lehnenmodul (3) einen Anschlagspunkt für einen Sicherheitsgurt aufweist.

## Claims

1. Backrest (1) for a vehicle seat (2), wherein the backrest (1) includes a plurality of backrest modules (3), wherein the backrest modules (3) comprise a central portion (4), and that at least one backrest module (3) is mechanically linked to one or two further backrest modules (3) of same type at the central portion (4), **characterized in that** at least two backrest modules (3) are movable relative to each other around an essentially vertical axis (A) of the backrest (1), wherein the movability between at least two backrest modules (3) can be blocked by a user, for example a seated person, wherein the rotatability of the backrest module (3) around the axis (A) can be blocked by a positive engagement of a blocking mechanism, wherein the blocking mechanism respectively includes at least two surfaces (10) of two backrest modules (3) forming a positive fit, wherein the positive engagement is effected upon a mechanical actuation by a seated person.

2. Backrest (1) according to claim 1, **characterized in that** at least two backrest modules (3) engage into each other at the central portions (4) of the backrest modules (3).

3. Backrest (1) according to claim 1 or 2, **characterized in that** at least one backrest module (3) on a first side of the central portion (4) comprises a recess (5) for receiving a plug-in element (6) of a further backrest module (3) and on a second side of the central portion (4) comprises a plug-in element (6).

4. Backrest (1) according to claim 3, **characterized in that** the plug-in element (6) of at least one backrest module (3) has the shape of a pin.

5. Backrest (1) according to any one of the preceding claims, **characterized in that** at least one backrest module (3) comprises two side wings (7) which extend from the central portion (4).

6. Backrest (1) according to claim 5, **characterized in that** the wings (7) are exchangeably and/or movably mounted on the central portion (4).

7. Backrest (1) according to any one of the preceding claims, **characterized in that** at least one backrest module (3) on at least one side comprises upholstery (8).

8. Backrest (1) according to claim 7, **characterized in that** the respective backrest modules (3) comprise varying upholstery (8) with different firmnesses, thicknesses and/or covers.

9. Backrest (1) according to any one of the preceding claims, **characterized in that** at least two backrest modules (3) are movable relative to each other along the axis (A) of the backrest (1) and around a transverse axis (B).

10. Backrest (1) according to any one of the preceding claims, **characterized in that** the movability between at least two backrest modules (3) can be blocked by shortening the backrest (1) in the axis (A) of the backrest (1).

11. Backrest (1) according to any one of the preceding claims,
**characterized in that** the movability between at least two backrest modules (3) can be blocked by means of at least one cord-like linkage (9) extending along the axis (A) of the backrest (1).

12. Backrest (1) according to any one of the preceding claims,
**characterized in that** at least one backrest module (3) comprises a through opening (12) in the central portion (4) in the axis (A) of the backrest (1), and that the backrest (1) includes a support rod (11), wherein the support rod (11) is located in the through opening (12).

13. Backrest (1) according to claim 12, **characterized in that**
the support rod (11) shows a lower bending stiffness in the direction of a first transverse rod axis (C) than in the direction of a second transverse rod axis (D) located perpendicular to the first transverse rod axis (C).

14. Backrest (1) according to claim 12 or 13, **characterized in**
**that** the movability between at least two backrest modules (3) can be blocked by mechanically actuating the support rod (11).

15. Backrest (1) according to any one of the preceding claims,
**characterized in that** at least one backrest module (3) comprises an attachment point for a safety belt.

## Revendications

1. Dossier (1) pour un siège de véhicule (2), dans lequel le dossier (1) comprend une pluralité de modules de dossier (3), dans lequel les modules de dossier (3) présentent une partie centrale (4), dans lequel au moins un module de dossier (3) est relié mécaniquement à un ou deux autres modules de dossier (3) du même type au niveau de la partie centrale (4), **caractérisé en ce qu'**au moins deux modules de dossier (3) sont mobiles l'un contre l'autre autour d'un axe (A) essentiellement vertical du dossier (1), dans lequel la mobilité entre au moins deux modules de dossier (3) peut être bloquée par un utilisateur, par exemple une personne assise, dans lequel un blocage de l'orientabilité du module de dossier (3) autour de l'axe (A) est réalisé au moyen d'une prise par adhérence de forme d'un mécanisme de blocage, dans lequel le mécanisme de blocage comprend respectivement au moins deux surfaces (10) de deux modules de dossier (3), qui forment une adhérence de forme, dans lequel la prise par adhérence de forme est réalisée après une commande mécanique par une personne assise.

2. Dossier (1) selon la revendication 1, **caractérisé en ce qu'**au moins deux modules de dossier (3) ont prise l'un dans l'autre sur les parties centrales (4) des modules de dossier (3).

3. Dossier (1) selon la revendication 1 ou 2, **caractérisé en ce qu'**au moins un module de dossier (3) présente sur un premier côté de la partie centrale (4) un évidement (5) pour le logement d'un élément enfichable (6) d'un module de dossier (3) supplémentaire et **en ce que** sur un deuxième côté de la partie centrale (4), il présente un élément enfichable (6).

4. Dossier (1) selon la revendication 3, **caractérisé en ce que** l'élément enfichable (6) d'au moins un module de dossier (3) est en forme de tourillon.

5. Dossier (1) selon l'une quelconque des revendications précédentes, **caractérisé en ce qu'**au moins un module de dossier (3) présente deux ailes (7) latérales s'étendant de la partie centrale (4).

6. Dossier (1) selon la revendication 5, **caractérisé en ce que** les ailes (7) sont disposées de manière interchangeable et/ou mobile sur la partie centrale (4).

7. Dossier (1) selon l'une quelconque des revendications précédentes, **caractérisé en ce qu'**au moins un module de dossier (3) présente un rembourrage (8) sur au moins un côté.

8. Dossier (1) selon la revendication 7, **caractérisé en ce que** les modules de dossier (3) respectifs présentent un rembourrage (8) différent ayant différentes duretés, différentes épaisseurs et/ou différents revêtements.

9. Dossier (1) selon l'une quelconque des revendications précédentes, **caractérisé en ce qu'**au moins deux modules de dossier (3) sont mobiles l'un contre l'autre le long de l'axe (A) du dossier (1) et autour d'un axe transversal (B).

10. Dossier (1) selon l'une quelconque des revendications précédentes, **caractérisé en ce que** la mobilité entre au moins deux modules de dossier (3) peut être bloquée par un raccourcissement du dossier (1) dans l'axe (A) du dossier (1).

11. Dossier (1) selon l'une quelconque des revendications précédentes, **caractérisé en ce que** la mobilité entre au moins deux modules de dossier (3) peut être bloquée par au moins une liaison (9) en forme de câble, s'étendant le long de l'axe (A) du dossier (1).

12. Dossier (1) selon l'une quelconque des revendications précédentes, **caractérisé en ce qu'**au moins un module de dossier (3) présente dans la partie centrale (4) une ouverture traversante (12) dans l'axe (A) du dossier (1) et **en ce que** le dossier (1) comprend une tige de soutien (11), la tige de soutien (11) étant disposée dans l'ouverture traversante (12).

13. Dossier (1) selon la revendication 12, **caractérisé en ce que** la tige de soutien (11) présente en direction d'un premier axe transversal de tige (C) une rigidité flexionnelle plus petite qu'en direction d'un deuxième axe transversal de tige (D) situé perpendiculairement au premier axe transversal de tige (C).

14. Dossier (1) selon la revendication 12 ou 13, **caractérisé en ce que** la mobilité entre au moins deux modules de dossier (3) peut être bloquée par une commande mécanique de la tige de soutien (11).

15. Dossier (1) selon l'une quelconque des revendications précédentes, **caractérisé en ce qu'**au moins un module de dossier (3) présente un point d'attache pour une ceinture de sécurité.
